# EUROPEAN PATENT APPLICATION

(11) **EP 1 627 865 A1**
(43) Date of publication of application: **22.02.2006**
(21) Application number: 05291516.2
(22) Date of filing: 13.07.2005
(51) Int. Cl.: C05G 3/00, B01J 2/30, A23L 1/00

(54) **Anti-caking and dust control coating compositions containing liquid-dispersed metallic salts of fatty acids and methods of using same**

(30) Priority: 17.08.2004 US 919782
(71) Applicant: ARR-MAZ Products, L.P., Winter Haven FL 33844 (US)
(72) Inventor: Spence, Stacy, Winter Haven, Florida 33880 (US)
(74) Representative: Portal, Gérard

(57) **Abstract**

Coating compositions containing a metallic salt of an aliphatic carboxylic fatty acid and an effective amount of a diluent for coating bulk solids are disclosed. The coating compositions of the present invention are particularly suited to reduce dust and cake formation in fertilizer.

## Description

### BACKGROUND OF THE INVENTION

### 1. Field of the invention.

This invention relates, generally, to coating compositions and methods of using same. In particular, the compositions of the present invention are used to coat bulk solids. In particular, the compositions of the present invention, which contain a metallic salt of an aliphatic fatty acid and an effective amount of a diluent, are used to coat bulk solids and are particularly suited to reduce cake formation and dust emissions in fertilizers or other bulk solids.

### 2. Description of the related art.

The storage and handling of bulk materials present unique problems relating to both dust formation and/or cake formation. Specifically, dust formation and dissemination pose safety, health and environmental problems. Cake formation presents problems in storing and handling of bulk materials.

These problems are particularly problematic in the fertilizer industry. Specifically, fertilizers, which are generally in powder, crystalline or granular forms have a tendency to cake. Over time fertilizers form more or less solid masses due to changes in humidity and/or temperature. Prior to application the fertilizer must be broken up to provide a material that is suitable for even distribution in the field and to prevent clogging of distribution machinery.

Fertilizer dust consists of fertilizer particles that are small and light enough to become airborne. Excessive dust is problematic for both producers and end-users. Specifically, fertilizer dust creates numerous problems, including problems associated with environmental compliance, worker safety, worker productivity and increased maintenance and repair of handling and storage equipment. In addition, dust levels tend to increase over time and are aggravated by prolonged storage and storage at less than ideal conditions. Further, dust poses a problem of spontaneous combustion. Spontaneous combustion is problematic because it relates to both the processing temperature of fertilizers and the storage temperature of the finished products.

Various techniques have been developed to overcome the problems associated with fertilizer caking, some with a measure of success. One of the more common approaches used to overcome caking, especially in the case of phosphatic fertilizers, includes the application of tallowamine dispersed in some type of petroleum hydrocarbon. Other examples of methods used to overcome caking involve fertilizer granulation by agitation with a small amount of water at elevated temperature, mixing fertilizers with inert mineral materials or bulky organic materials, spraying the fertilizer with molten materials, such as paraffin waxes, asphalts and petroleum resins to form pellets of uniform size and reduce the points of contact between fertilizer particles have been found to inhibit caking for brief periods of time. Additional approaches for the reduction of caking include shipping fertilizers in moisture proof bags or other containers and growing large crystals which are screened to uniform sizes.

Several forms of diluents or carriers are effective in the present invention. For example, methyl and ethyl esters of fatty acids are well known and find application in many areas, including as a carrier for herbicides in agricultural applications and as a solvent for cleaning equipment used in the asphalt industry.

Some of the treatments described above that are used to improve anti-caking in fact produce dusting problems. In addition, although these additives and treatments may show improved anti-caking and anti-dusting properties, they all reduce the concentration of the nutrients in the fertilizer, resulting in a lower grade product. Further, impregnating or coating the fertilizer particles interferes with the rate of release of nutrients.

There has been no suggestion whatsoever that fertilizers coated with liquid-dispersed metallic salts of fatty acids would exhibit superior anti-caking and anti-dusting properties. In view of the prior art at the time the present invention was made, it was not obvious to those of ordinary skill in the pertinent art how the needed fertilizers having improved dust control and reduced caking properties, could be provided, without adversely impacting the quality and/or rate of release of the fertilizer.

### SUMMARY OF THE INVENTION

In accordance with the present invention, a composition for coating bulk solids is provided. The bulk solids of the present invention include organic materials, inorganic materials and combinations thereof which are granulated, crushed, compacted, crystalline or prilled solids and combinations thereof. The coating contains a metallic salt of an aliphatic fatty acid and an effective amount of a diluent. The diluent may be a methyl or ethyl ester of fatty acids, oils and combinations thereof derived from animal, plant and synthetic materials. The diluent may also be a vegetable oil such as corn oil, canola oil, cottonseed oil, sunflower oil, soybean oil, linseed oil, castor oil or tall oil and combinations thereof. Other examples of diluents useful in the present invention include, but are not limited to glycerine, glycols, oligomers or polymers of glycerine or glycols, white oil and mineral oil. Of course, any one or any combination of the above diluents can be used in the present invention. The effective amount of the diluent is from about 50% to about 99.0% by weight of the total weight of the coating composition. The viscosity of the coating composition is from about 3 cP to about 5000 cP at 60°C.

Bulk solids coated with the coating composition of the present invention cake less than bulk solids coated with a coating composition containing an effective amount of tallowamine dispersed in a petroleum hydrocarbon diluent. In fact, bulk solids coated with the coating composition of the present invention cake less than bulk solids coated the powdered metallic salt of a fatty acid alone. The invention accordingly comprises the features and combination of elements in the following description and its scope will be pointed out in the appended claims.

### BRIEF DESCRIPTION OF THE DRAWING

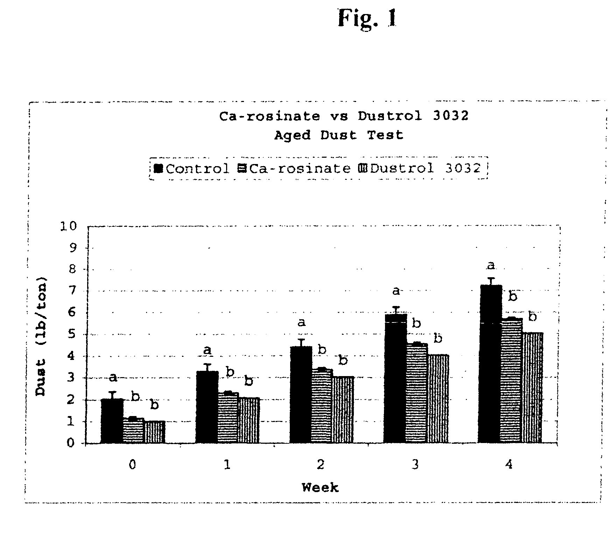

Fig. 1 is a graphical comparison of the dust levels obtained with the present invention.

### DETAILED DESCRIPTION OF THE INVENTION

The present invention relates to coating compositions and method of using such compositions for bulk solids containing metallic salts of fatty acids dispersed in a diluent. Preferably these coatings are used to treat fertilizers to reduce caking and dust formation. Specifically, it has been found that metallic salts of fatty acids dispersed in a diluent advantageously replace prior art tallowamine anticake dispersed in petroleum based carriers and also the powdered metallic salts of fatty acids alone in caking reduction of fertilizers.

The metallic salt of the aliphatic fatty acid can be comprised of at least one member selected from the group of metals consisting of lithium, sodium, magnesium, potassium, calcium, zinc, aluminum, and combinations thereof.

For example, calcium stearate is one of the types of metallic salts of fatty acids useful in the present invention. The traditional method of producing calcium stearate involved reaction of an aqueous solution of calcium chloride and sodium stearate, followed by isolation of the resultant precipitate. For large-volume production, it is more feasible to make use of a dry-fusion process that does not require the use of organic solvents. The process involves the reaction of a mixture of palmitic and stearic acids with calcium oxide (quicklime). The resultant calcium stearate product may be supplied in range of particle sizes, depending on the needs of the end user.

A more economical form of a fatty acid metallic salt may be produced by adding a requisite amount of calcium oxide to a methylated blend of fatty acids, such as tall oil fatty acid, at an elevated temperature. The fatty acid calcium salts, or calcium rosinate thus produced may be used as a dust control coating, anticaking reagent or blended further with methyl ester or other suitable diluent to achieve a desired viscosity for other applications.

Generally, the aliphatic fatty acid portion of the metallic salt of the aliphatic fatty acid used in the present invention can include at least one member selected from the group of acids having from 6 to 24 carbon atoms per molecule.

The methyl and/or ethyl esters useful in the present invention can be distilled or otherwise purified, following reaction of an appropriate alcohol, by methods known in the art, with glycerides from various sources including, but not limited to rapeseed oil, sunflower oil, corn oil, safflower oil or soybean oil. The esters useful in the present invention are chains consisting of 6 to 24 carbon atoms containing 1 to 3 double bonds, depending on the glyceride source, with the following general formula 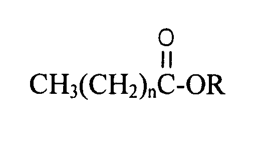 wherein n = 5 - 23. R represents CH₃ or CH₂CH₃, with the methyl esters being the preferred diluents.

The coating compositions are used to coat organic and inorganic fertilizer compositions, as well as combinations thereof. The fertilizer, useful in the present invention, is in a granular, pelletized, crushed, compacted, crystalline or prilled form. The coating compositions of the present invention do not interfere with the quality grade or rate of release of the fertilizer. In particular, the coating compositions of the present invention contain an effective amount of a carrier, which is sufficient to dilute the fatty acid metallic salt to provide a coating material having a viscosity that is suitable for spraying and even distribution on the bulk solids to reduce dust and cake formation while maintaining the quality and nutrient release rate of the fertilizer. The coating composition of the present invention changes the surface characteristics of the bulk solid, rendering it resistant to caking and dust formation during shipment and storage.

### EXAMPLES

The following examples serve to provide further appreciation of the invention and are not meant in any way to restrict the effective scope of the invention.

### EXAMPLE 1 - Determination of Dust Control Effectiveness.

Coating materials were prepared in the following manner. Calcium rosinate was produced through addition of a requisite amount of calcium oxide to a methyl ester made from tall oil fatty acid. The viscosity of the calcium rosinate was approximately 100 cps at 140°F. An asphalt-based coating with an equivalent viscosity, Dustrol® 3032, was prepared for comparison with the calcium rosinate. All viscosities were determined using a Brookefield viscometer.

Bulk materials were coated in the following manner.

Diammonium Phosphate (DAP) fertilizer was obtained from Cargill Fertilizer, Bartow, Florida. Nine 200g samples of DAP were weighed into wide-mouth, glass quart jars and placed in a 140°F oven.

Samples of the calcium rosinate coating and Dustrol® 3032 described above were also placed in a 140°F oven.

After 1 hour, three DAP samples were removed from the oven and coated with Dustrol® 3032 at a rate of 0.5 gal/ton of DAP.

Three additional DAP samples were coated with the calcium rosinate coating at a rate of 0.5 gal/ton of DAP.

A final three DAP samples were left as uncoated controls.

The treatment process was the same for all samples, with the exception that nothing was added in a dropwise manner to the uncoated controls. The uncoated controls, however, were subject to tumbling for five minutes as described below.

Specifically, the particular coating was added to each respective container of DAP in a dropwise fashion, followed by rolling each container on a rock tumbler (INDCO, Inc., New Albany, Indiana) for five minutes. A Varitemp® heat gun (Master Appliance Corp., Racine, Wisconsin), set on high, was directed at each container of DAP during the five-minute tumbling process.

Dust levels of each sample were measured using the dust tower disclosed and claimed in U.S. Patent No. 6,062,094 which is incorporated herein by reference, in its entirety. Dust levels were measured at 0-days (initial), 7-days, 14-days, 21 days and 28 days. The results of these dust level determinations are shown in Fig.1.

As shown in Fig. 1, the average dust level of DAP coated with Dustrol 3032 was slightly lower than that for the Ca-rosinate at every week; however, subjecting the raw dust data to statistical analysis (analysis of variance) shows no significant differences in the mean dust levels of the coated DAP at every week of measurement. This is further illustrated by the alphabetical labels at the top of each column in the graph - means that are not significantly different at the 0.05 level, using the Tukey test, have the same label (b).

### EXAMPLE 2 - Determination of Cake Strength.

Samples of DAP (100g), coated as described in EXAMPLE 1, with nothing (control), powdered calcium stearate, powdered calcium stearate in methyl ester and tallowamine in petroleum hydrocarbon were placed into each of three cylindrical, perforated sample cells. See TABLE 2 below for a listing of the percentage of calcium stearate in methyl ester versus viscosity at 140°F. The sample cells were 3.4 inches long with a 2 inch diameter. A pneumatic plunger was placed atop each of the nine samples and pressurized to 10 psi.

**TABLE 2: Percent Calcium Stearate in Methyl Ester Versus Viscosity at 140°F.**

| **Calcium stearate (%)** | **Methyl ester (%)** | **Viscosity at 140F (cPs)** |
|---|---|---|
| 1 | 99 | 3 |
| 5 | 95 | 4 |
| 10 | 90 | 6 |
| 20 | 80 | 14 |
| 25 | 75 | 24 |
| 30 | 70 | 45 |
| 40 | 60 | 141 |
| 50 | 50 | 3460 |

The DAP samples were then exposed to a range of temperatures and humidities, as indicated in TABLE 3 below, which accelerate the caking process.

**TABLE 3: Humidity Chamber Conditions for Accelerated Caking of Bulk Solids.**

| **Time (h)** | **Temp (F)** | **Relative Humidity (%)** |
|---|---|---|
| 8.0 | 120 | 70 |
| 16.0 | 68 | 50 |

Upon cooling to room temperature, pressure from the pneumatic plungers was removed and the breaking strength of the resultant cake was measured using a 1/4" probe attached to a strain gauge. Penetration of the probe to a depth of one inch within the cake, followed by reading the strain gauge value yields the pound strength of the respective cake and these results are indicated in TABLE 4 below.

**TABLE 4: Cake Strengths.**

| | | **Cake Strength (lbs)** | | | | | |
|---|---|---|---|---|---|---|---|
| **COATING** | **Coating Rate (lbs/ton)** | **DAP** | **MAP** | **Potash** | **Urea** | **Ammonium sulfate sulfate** | **NPK Blend** |
| Control | | 30.7 | 41.5 | 47 | 95.6 | 52.8 | 19.2 |
| 1% Ca-stearate/Me-ester | 10 | 23.2 | 35.8 | 20.5 | 8.1 | 36.5 | 17.8 |
| 5% Ca-stearate/Me-ester | 10 | 12.8 | 18.2 | 14.6 | 5.5 | 28.8 | 15.6 |
| 25% Ca-stearate/Me-ester | 10 | 3.0 | 4.8 | 11.8 | 3.7 | 4.5 | 5.6 |
| 50% Ca-stearate/Me-ester | 10 | 1.3 | 2.5 | 10.1 | 2.1 | 3.8 | 3.4 |
| Ca-stearate powder | 2.5 | 3.6 | 5.2 | 12.8 | 4.3 | 4.8 | 8.5 |
| Tallowamine/Petroleum diluent | 10 | 5.7 | 7.9 | 16.2 | 33.6 | 8.2 | 29.7 |

As shown in TABLE 4, all of the inventive coatings reduce caking with respect to the untreated control. The cake strengths of the fertilizers coated with 25% or 50% calcium stearate in methyl ester yielded cake strengths less than that of the powdered calcium stearate alone and the prior art tallowamine in petroleum hydrocarbon coating. These results indicate that fertilizers coated with the coatings of the present invention are easier to handle and do not cake as readily as fertilizers coated with petroleum hydrocarbon coatings containing tallowamine anticake.

Caking tendency of ammonium sulfate coated with calcium stearate dispersed in diluents other than methyl ester was tested and the results are shown in TABLE 5 below:

**TABLE 5: Cake Strengths of Ammonium Sulfate Coated with Calcium Stearate Dispersed in Various Diluents.**

| **Coating** | **Coating Rate (lbs/ton)** | **Cake Strength (lbs)** |
|---|---|---|
| Control | 10 | 48.9 |
| 1% Ca-stearate/Mineral oil | 10 | 31.1 |
| 5% Ca-stearate/Mineral oil | 10 | 26.2 |
| 25% Ca-stearate/Mineral oil | 10 | 23.3 |
| 1% Ca-stearate/soybean oil | 10 | 27.5 |
| 5% Ca-stearate/soybean oil | 10 | 26.8 |
| 25% Ca-stearate/soybean oil | 10 | 21.7 |
| 1% Ca-stearate/glycerine | 10 | 21.5 |
| 5% Ca-stearate/glycerine | 10 | 9.8 |
| Tallowamine/petroleum diluen | 10 | 28.4 |

These experimental results demonstrate that the coating compositions of the present invention are superior to the prior art coatings, which contain tallowamine dissolved in a petroleum hydrocarbon.

Thus, while there has been described what are presently believed to be the preferred embodiments of the invention, those skilled in the art will understand that other and further modifications can be made without departing from the spirit of the invention. It is intended that the present invention include all such modifications as come within the scope of the invention as set forth in the claims.

## Claims

1. A composition for coating a bulk solid comprising:
a metallic salt of an aliphatic fatty acid; and
an effective amount of diluent selected from any one or any combination of the following:
methyl and ethyl esters of fatty acids, oils and combinations thereof,
a vegetable oil including corn oil, canola oil, cottonseed oil, sunflower oil, soybean oil, linseed oil, castor oil or tall oil and combinations thereof,
glycerine or glycols or oligomers or polymers of glycerine or glycols, or combinations thereof, or
a petroleum hydrocarbon including white oil or refined mineral oil or combinations thereof.

2. The composition according to claim 1, wherein the metallic salt of the aliphatic fatty acid comprises at least one member selected from the group of metals consisting of lithium, sodium, magnesium, potassium, calcium, zinc, aluminum, and combinations thereof.

3. The composition according to claim 1 or 2, wherein the aliphatic fatty acid portion of the metallic salt of the aliphatic carboxylic acid comprises at least one member selected from the group of acids having from 6 to 24 carbon atoms per molecule.

4. The composition according to anyone of claims 1 to 3, wherein the bulk solid is of a form selected from the group of granular, crushed, compacted, crystalline and prilled fertilizer and combinations thereof.

5. The composition according to anyone of claims 1 to 4, wherein the methyl or ethyl esters and combinations thereof are derived from animal, plant and synthetic materials.

6. The composition according to anyone of claims 1 to 5, wherein the effective amount of diluent is from about 50.0% to about 99.0% by weight of the total weight of the coating composition.

7. The composition according to anyone of claims 1 to 6, wherein the composition has a viscosity of from about 3 cP to about 5000 cP at 60°C.

8. The composition according to anyone of claims 1 to 7, wherein the composition has a viscosity of from about 3 cP to about 5000 cP at 60°C.

9. The composition according to anyone of claims 1 to 8, wherein the bulk solid cakes less than a bulk solid that is uncoated, coated with a composition comprising the metallic salt of the aliphatic fatty acid alone or coated with a petroleum hydrocarbon containing tallowamine anti-caking agent.

10. The composition according to anyone of claims 1 to 9, wherein the bulk solid cakes less than a bulk solid that is uncoated, coated with a composition comprising the metallic salt of the aliphatic fatty acid alone or coated with a petroleum hydrocarbon containing tallowamine anti-caking agent.

11. A method for reducing caking tendency for a bulk solid comprising:
coating the bulk solid with a composition comprising a metallic salt of an aliphatic fatty acid and an effective amount of diluent
selected from any one or any combination of the following:
methyl and ethyl esters of fatty acids, oils and combinations thereof,
a vegetable oil including corn oil, canola oil, cottonseed oil, sunflower oil, soybean oil, linseed oil, castor oil or tall oil and combinations thereof,
glycerine or glycols or oligomers or polymers of glycerine or glycols, or combinations thereof, or
a petroleum hydrocarbon including white oil or refined mineral oil or combinations thereof.

12. The method according to claim 11, wherein the metallic salt of the aliphatic fatty acid comprises at least one member selected from the group of metals consisting of lithium, sodium, magnesium, potassium, calcium, zinc, aluminum, and combinations thereof.

13. The method according to claim 11 or 12, wherein the aliphatic fatty acid portion of the metallic salt of the aliphatic carboxylic acid comprises at least one member selected from the group of acids having from 6 to 24 carbon atoms per molecule.

14. The method according to anyone of claims 11 to 13, wherein the bulk solid is of a form selected from the group of granular, crushed, compacted, crystalline and prilled fertilizer and combinations thereof.

15. The method according to anyone of claims 11 to 14, wherein the methyl or ethyl esters and combinations thereof are derived from animal, plant and synthetic materials.

16. The method according to anyone of claims 11 to 15, wherein the bulk solid is an organic material, an inorganic material and combinations thereof.

17. The method according to anyone of claims 11 to 16, wherein the effective amount of diluent is from about 50.0% to about 99.0% by weight of the total weight of the coating composition.

18. The method according to anyone of claims 11 to 17, wherein the composition has a viscosity of from about 3 cP to about 5000 cP at 60°C.

19. The method according to anyone of claims 11 to 18, wherein the composition has a viscosity of from about 3 cP to about 5000 cP at 60°C.

20. The method according to anyone of claims 11 to 19, wherein the bulk solid cakes less than a bulk solid that is uncoated, coated with a composition comprising the metallic salt of an aliphatic acid alone or coated with a petroleum hydrocarbon containing tallowamine anti-caking agent.

21. The method according to anyone of claims 11 to 20, wherein the bulk solid cakes less than a bulk solid that is uncoated, coated with a composition comprising the metallic salt of an aliphatic acid alone or coated with a petroleum hydrocarbon containing tallowamine anti-caking agent.
